(19) Europäisches Patentamt
European Patent Office
Office européen des brevets

(11) **EP 1 394 996 B1**

(12) **EUROPEAN PATENT SPECIFICATION**

(45) Date of publication and mention
of the grant of the patent:
**13.08.2008 Bulletin 2008/33**

(51) Int Cl.:
*H04L 12/46* (2006.01)          *H04L 12/28* (2006.01)

(21) Application number: **03018573.0**

(22) Date of filing: **18.08.2003**

(54) **Network device and method**

Netzwerk-Vorrichtung und Verfahren

Dispositif de réseau et méthode

(84) Designated Contracting States:
**DE FR GB**

(30) Priority: **26.08.2002   JP 2002245373**

(43) Date of publication of application:
**03.03.2004   Bulletin 2004/10**

(73) Proprietor: **KABUSHIKI KAISHA TOSHIBA
Tokyo (JP)**

(72) Inventors:
• **Okazaki, Jun
1-1 Shibaura 1-chome
Minato-ku
Tokyo 105 (JP)**

• **Kokubo, Takashi
1-1 Shibaura 1-chome
Minato-ku
Tokyo 105 (JP)**
• **Okuyama, Takehiko
1-1 Shibaura 1-chome
Minato-ku
Tokyo 105 (JP)**

(74) Representative: **Henkel, Feiler & Hänzel
Patentanwälte
Maximiliansplatz 21
80333 München (DE)**

(56) References cited:
**EP-A- 0 899 655          EP-A- 0 932 275
EP-A- 1 063 829**

**Description**

The invention relates to improvement of a network device and a network method, by which mutual transmission/reception of data is realized among networks with different standards from each other.

Recently, it has been possible to construct a network system in which two or more pieces of AV (Audio Video) equipment are connected to each other in a free form by a serial bus using a digital interface according to the IEEE (Institute of Electrical and Electronics Engineers) 1394 standard, as is generally known.

Moreover, the IEEE 1394. 1 standard has existed in order to connect a network according to the IEEE 1394 standard and another network constructed according to a standard other than IEEE 1394 and to transmit/receive data between both networks. In the IEEE 1394. 1 standard, an equipment (node) which functions as a conduit between networks is called as a bridge. The following processing is executed in the bridge:

(1) The node which functions as a bridge notifies each network of its own bridge function, using an extended flag in a Self_ID packet. Thereby, each node (AV equipment) constructing each network understands the extended flag supplied from the bridge.
(2) Each network is processed as a different bus from each other. That is, each network has individual Bus_IDs which are defined in the IEEE 1394 standard. Accordingly, each node in one network can access those in other networks, using the Bus IDs.
(3) Destination addresses (Node_IDs in the IEEE 1394 standard) of each node (AV equipment) constructing other networks are managed by the bridge which assigns virtual Node_IDs.

However, the following problems have been caused in the above-described network bridge:

(1) In the application of the IEEE 1394. 1 standard, conformity of even a physical layer level to the standard is required and modifications are indispensable in LSIs (Large Scale Integration) meeting the current IEEE 1394a-2000 standard, for it is indicated by the extended flag in the Self_ID packet which node manages the virtual IDs, that is, which one is the bridge. Therefore, the conformity to the standard becomes difficult in the existing equipment which has already been marketed.
(2) Although each node in a network accesses nodes in other networks, using the Bus_IDs, there has also existed a network which has a protocol under which the Bus_IDs cannot be used. For example, in the protocol standard of the IEC (International Electrotechnical Commission) 61883 in which data transmission according to MPEG (Moving Picture Experts Group) 2-TS (Transport Stream) and the like is executed under use of isochronous packets, the Bus_IDs are not used and only Physical_IDs are utilized in order to indicate the source of the isochronous packets. Accordingly, a source cannot be identified in the case of a packet from another network with a different Bus_ID. Here, a Node_ID which indicates a destination in the IEEE 1394 standard is expressed as follows:

$$\text{Node\_ID} = \text{Bus\_ID (ten bits)} + \text{Physical\_ID}$$

(six bits)

EP 1 063 829 A2, which is believed to disclose the most relevant state of the art, discloses a gateway configured to realize a connection between a network where HAVi devices are hooked up and another network in accordance with a Play-and-Plug spec. (e.g. the internet protocol (IP)) other than the HAVi spec. An HAVi plug-in detector detects a plug-in of a device to the HAVi network. A virtual device functions as a gateway for accessing from a device plugged-in the IP network to the device plugged-in the HAVi network. A virtual device controller provides the virtual device with an IP identifier for accessing to the virtual device from the IP network, and turns the virtual device to a standby status waiting for connection. A pseudo address generator generates a pseudo address for the virtual device to communicate with the device in the HAVi network, and provides the virtual device with the pseudo address. An address-correspondence-controller controls the correspondence between an HAVi address and the IP identifier both provided to the virtual device.

The invention has been made, considering the above-described circumstances and its object is to provide a network device and a network method, by which it becomes possible to facilitate mutual identification of equipment in networks with standards different from each other and to realize mutual transmission/reception of data among the networks

The above object is achieved by a network device according to claim 1 and by a method according to claim 3. The dependent claims are directed to different advantageous aspects of the invention..

The invention can be more fully understood from the following detailed description when taken in conjunction with the accompanying drawings, in which:

FIG. 1 is a block diagram showing one embodiment according to the invention and explaining a state where two kinds of networks are connected to each other through a bridging device;

FIG. 2 is a block diagram explaining a detailed configuration of the bridging device in the embodiment;

FIG. 3 is a block diagram explaining a state where the two kinds of networks in the embodiment are virtually connected as one network;

FIG. 4 is a flow chart explaining operations by which a piece of equipment in one network recognizes another piece of equipment in the other network according to the embodiment; and

FIG. 5 is a flow chart explaining operations by which data transmission is executed from a piece of equipment in one network to another piece of equipment in the other network according to the embodiment.

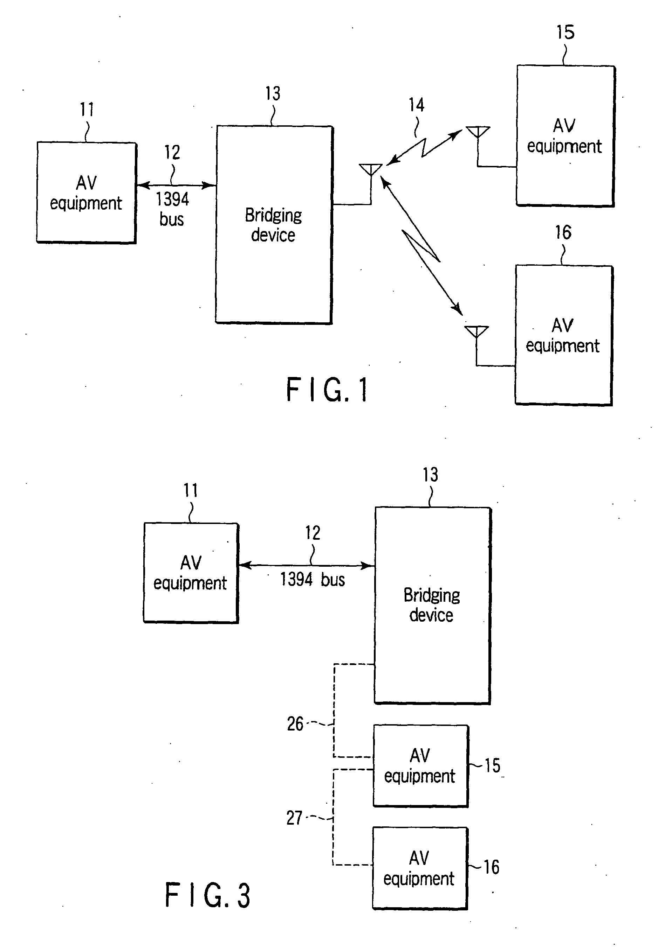

Hereinafter, one embodiment according to the invention will be explained in detail, referring to drawings. In FIG. 1, a reference numeral 11 is AV equipment, for example, which complies with IEEE 1394a-2000.

The AV equipment 11 is connected to a bridging device 13 through a network bus of a first network complying with the IEEE 1394 High Performance Serial Bus standard.

Also, the bridging device 13 can transmit/receive data to/from two or more pieces (two pieces in the drawing) of AV equipment 15 and 16 through a wireless network 14 of a second network, according to the IEEE 802. 11a standard and the like.

It is configured in this embodiment that the AV equipment 11 connected to the 1394 bus 12 specifies an arbitrary piece of AV equipment 15 or 16 connected to the wireless network 14 according to another standard and executes transmission/reception of data to/from the arbitrary equipment.

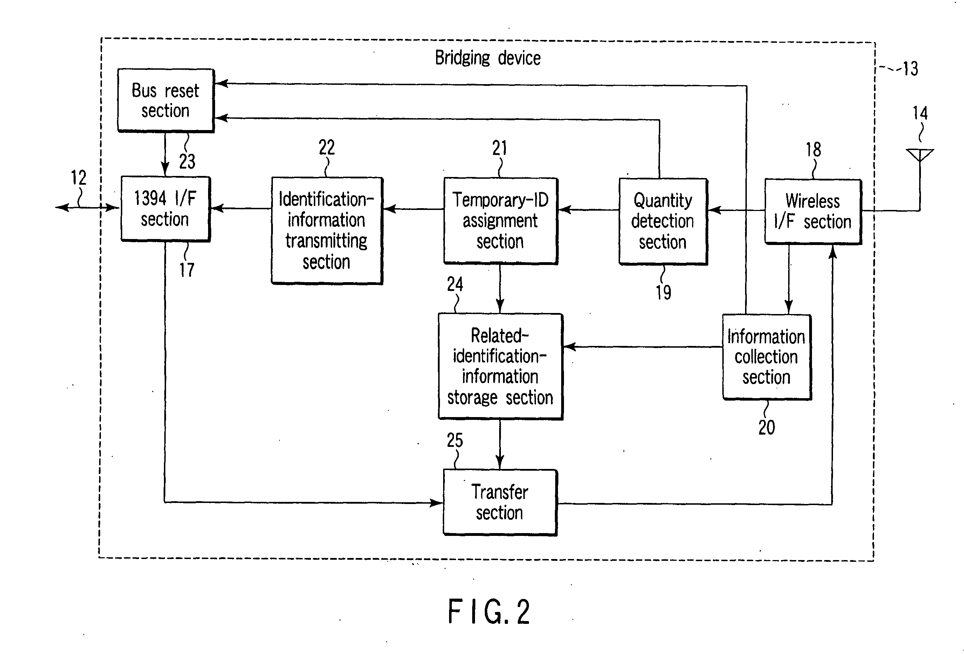

FIG. 2 shows the details of the bridging device 13. The bridging device 13 comprises: a 1394 I/F (Interface) section 17; a wireless I/F section 18; a quantity detection section 19; an information collection section 20; a temporary-ID assignment section 21; an identification-information transmitting section 22; a bus reset section 23; an related-identification-information storage section 24; and a transfer section 25.

The 1394 I/F section 17 is connected to the 1394 bus 12 and is an interface which executes transmission/ reception of data to/from the AV equipment 11 in processing according to the IEEE 1394-1995 standard or the IEEE 1394a-2000 standard.

The wireless I/F section 18 is connected to the wireless network 14 and is an interface for executing transmission/ reception of data to/from the AV equipment 15 or 16 in processing according to a standard for a wireless network.

The quantity detection section 19 detects through the wireless I/F section 18 the number of the pieces of AV equipment 15 and 16 which are connected to the wireless network 14. The information collection section 20 collects through the wireless I/F section 18 various kinds of information on the pieces of AV equipment 15 and 16 which are connected to the wireless network 14.

The temporary-ID assignment section 21 issues the corresponding number of temporary IDs (identifiers) to that of the pieces of AV equipment 15 and 16 detected in the quantity detection section 19 and assigns the temporary IDs to the pieces of AV equipment 15 and 16, respectively.

The identification-information transmitting section 22 is configured to transmit the IDs issued in the temporary-ID assignment section 21 to the 1394 bus 12 through the 1394 I/F section 17 in a state where the IDs are stored in Self_ID packets, respectively.

The bus reset section 23 is configured to reconstruct the 1394 bus 12 through the 1394 I/F section 17 in order to give information on the pieces of AV equipment 15 and 16 connected to the wireless network 14 to the AV equipment 11 on the 1394 bus 12, based on at least one of an output from the quantity detection section 19 or that from the information collection section 20.

The related-identification-information storage section 24 stores various information items about the AV equipments 15 and 16 connected to the wireless network 14. The information items have been supplied from the information collection section 20. The section 24 stores the IDs of the AV equipments 15 and 16, which have been issued from the temporary-ID assignment section 21. In the storage section 24, the information items are stored in association with the IDs of the AV equipments 15 and 16.

The transfer section 25 converts the destination of a packet, among packets transmitted from the AV equipment 11 on the 1394 bus 12, with an ID, by which an arbitrary piece of AV equipment 15 or 16 on the wireless network 14 has been addressed, to that of the AV equipment 15 or 16 on the wireless network 14 and reconstructs the packet to obtain a packet with a format according to a protocol meeting that of the wireless network 14.

Hereinafter, operations will be explained in the above configuration. In the first place, the AV equipment 11 and the bridging device 13 mutually recognize on the side of the 1394 bus 12 that only both of the pieces of equipment are connected to the network. Also, the bridging device 13, and the pieces of AV equipment 15 and 16 mutually recognize on the side of the wireless network 14 that only three pieces of equipment are connected to the network 14.

Under the above circumstances, the bridging device 13 identifies the pieces of AV equipment 15 and 16 connected to the wireless network 14. The quantity detection section 19 executes the above identification by detection, through the wireless I/F section 18, of the number of the pieces of AV equipment 15 and 16 connected to the wireless network 14. Also, the information collection section 20 executes the above identification by collection, through the wireless I/F section 18, of various kinds of information on the pieces of AV equipment 15 and 16 connected to the wireless network 14.

The information which is collected in the information collection section 20 is as follows:

   * IDs unique to the pieces of AV equipment 15 and 16, such as MAC (Media Access Control) addresses and EUI 64 identifiers.
   * Identification information on the protocols such as IP (Internet Protocol) addresses and Node_IDs according to the IEEE 1394 standard.
   * Protocols, data types, and data formats which the pieces of AV equipment 15 and 16 can process, such as TCP (Transmission Control Protocol) and UDP (User Datagram Protocol), Subunit information for AV/C (audio video control), and formats of image data according to MPEG2-TS.
   * Information which the pieces of AV equipment 15 and 16 store, such as names, names of manufacturers, versions, and icons for the pieces of equipment.
   * Information on configurations of the pieces of AV equipment 15 and 16, such as data rates and buffer sizes with which information can be transmitted/received.

Since it is shown that there has been a change in the configuration of the wireless network 14 when the number of the pieces of equipment detected in the quantity detection section 19 is one or more, or, when the pieces of AV equipment 15 and 16 have been changed to different pieces of equipment from those of the collection result by the information collection section 20 even if the number of detection is not changed, the configuration of the 1394 bus 12 is required to be changed.

In such a case, the bridging device 13 is configured to add the pieces of AV equipment 15 and 16 on the wireless network 14 to the 1394 bus 12. That is, a number of IDs, equal to the number of pieces of equipment detected in the quantity detection section 19 (equivalent to Physical_IDs, for the IEEE 1394 standard is applied here as an example) are issued in the temporary-ID assignment section 21. Here, the Physical _ID is called "a temporary ID", for the Physical _ID is changed at change in the configuration of the bus, that is, at reset of the bus in the IEEE 1394 standard.

When the bus reset section 23 detects, from at least one of an output from the quantity detection section 19 and that from the information collection section 20, that the configuration of the wireless network 14 is changed, the 1394 bus 12 is configured to be reconstructed (bus reset) according to the IEEE 1394 standard by the bus reset section 23 through the 1394 I/F section 17.

At the final stage of the bus reset, packets, called Self_ID packets, are generated in the 1394 I/F section 17 and are transmitted to the 1394 bus 12. There is, in a Self_ID packet, an area where a Physical_ID is stored, and a node (the AV equipment 11) which receives the Self_ID packets detects how many nodes exist on the above 1394 bus 12. Thereby, after the Self_IDs are transmitted at the final stage of the bus reset, the 1394 I/F section 17 in the bridging device 13 sends the Self_IDs of the pieces of AV equipment 15 and 16.

For example, when it is assumed that the AV equipment 11 sends a Self_ID packet of a Physical_ID (PHY_ID) = 0, the 1394 I/F section 17 sends Self ID packets, respectively of a PHY_ID = 1 (for the AV equipment 15), a PHY_ID = 2 (for the AV equipment 16), and a PHY_ID = 3 (for the equipment 17 itself, that is, the bridging device 13).

Then, the AV equipment 11 having received these Self_ID packets recognizes that four pieces, including the equipment 11 itself, of equipment 11, 13, 15, and 16 are connected to the 1394 bus 12, (including virtual 1394 buses 26 and 27) as shown in FIG. 3.

Also, since the set membership among pieces of equipment in a network is defined immediately after starting of bus reset in the IEEE 1394 standard, a configuration in which PHY_IDs are assigned to the pieces of equipment on the wireless network 14 and a virtual set membership among the pieces of equipment is defined may be applied in the temporary-ID assignment section 21.

The set membership is transmitted to the AV equipment 11 on the 1394 bus 12 in a Self_ID packet. For example, it is defined as shown in FIG. 3 that the AV equipment 11 is a child of the bridging device 13; the AV equipment 16 is a child of the AV equipment 15; and the AV equipment 15 is a child of the bridging device 13 and a parent of the AV equipment 16.

In order to smoothly execute a series of operations for transmitting the above Self_ID packets, it is preferable that the bridging device 13 is a route node (the route node is a parent node and a node which is not a child node and which has the largest PHY_ID) on the 1394 bus 12. Thereby, there may be considered a configuration in which a route acquisition section (not shown) influences the 1394 I/F section 17 so that the bridging device 13 becomes a route node.

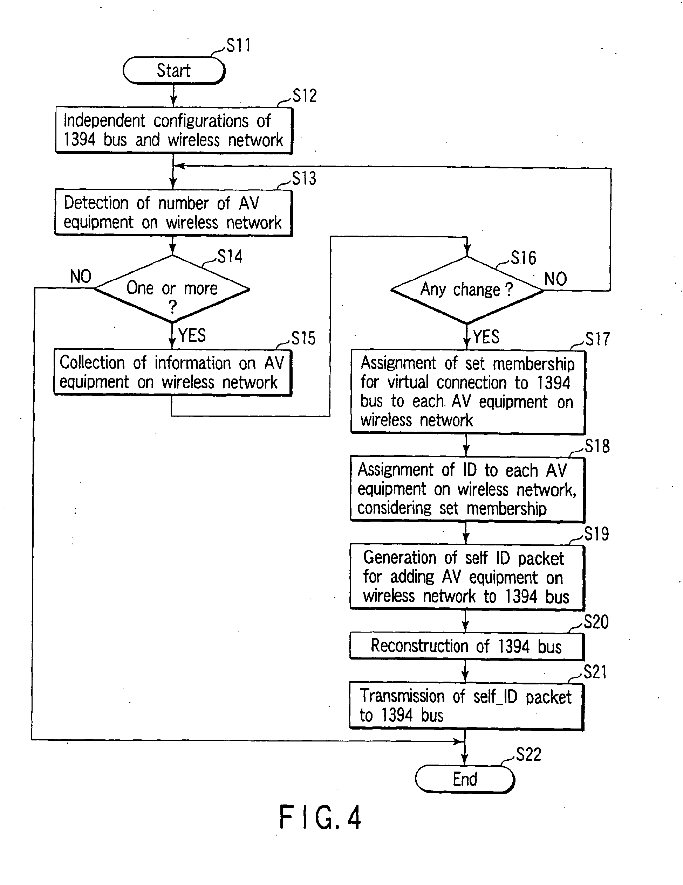

FIG. 4 shows a flow chart for a series of operations which transmit Self_ID packets. In the first place, processing is started (step S11) and the bridging device 13 recognizes in step S12 that each of the 1394 bus 12 and the wireless network 14 individually forms a network.

Subsequently, the bridging device 13 detects in step S13 the number of the pieces of AV equipment 15 and 16 which are connected to the wireless network 14 and judges in step S14 whether the number is one or more. Then, when it is decided that the number is not one or more (NO), the bridging device 13 ends the processing (step S22).

Also, when it is decided in step S14 that the number is one or more (YES), the bridging device 13 collects in step S15 information on each of the AV equipment 15 or 16 on the wireless network 14 and it is determined in step S16 whether there is a change in the information on the pieces of AV equipment 15 and 16.

Then, when it is decided that there is no change (NO), the processing of the bridging device 13 is returned to that of STEP S13. Also, when it is decided in step S16 that there is a change (YES), the bridging device 13 makes, in step S17, a set relationship among the pieces of AV equipment 15 and 16 on the wireless network 14 for a case in which the pieces of equipment are virtually connected to the 1394 bus 12.

Subsequently, the bridging device 13 assigns, in step S18, IDs to each piece of the AV equipment 15 and 16, considering the set membership for virtual connection of the pieces of AV equipment 15 and 16.

In such a case, various kinds of information on the pieces of AV equipment 15 and 16 collected in step S15 and IDs, which have been issued in step S18 corresponding to each piece of the AV equipment 15 and 16, are stored in the related-identification-information storage section 24 in relation to each other.

Then, the bridging device 13 generates, in step S19, Self_ID packets, by which the pieces of AV equipment 15 and 16 on the wireless network 14 are added to the 1394 bus 12, from the set membership for the virtual connection and the assigned IDs.

Thereafter, the bridge device 13 reconstructs the 1394 bus 12 (thus, performing bus reset) in step S20. In Step S21, the self_ID packets are transmitted to the 1394 bus 12. In step S22, the process is terminated.

Next, operations for a case in which data is transmitted from the AV equipment 11 to the AV equipment 15 in a state where the AV equipment 11 recognizes that four pieces of equipment 11, 13, 15, and 16, including the equipment 11 itself, are connected to the 1394 bus 12 will be explained as one example.

That is, various kinds of information, collected in the information collection section 20, regarding the pieces of AV equipment 15 and 16 on the wireless network 14, and IDs (PHY_IDs) assigned to the pieces of the AV equipment 15 and 16, have been stored in the above-described related-identification-information storage section 24 in relation to each other.

Usually, the AV equipment 11 inquires of each node on the 1394 bus 12 for the performance and the equipment type after the bus reset. But a configuration in which the bridging device 13 answers the inquiry as a proxy may also be applied. In this case, information in the related-identification-information storage section 24 corresponding to the PHY_ID of the AV equipment under inquiry is supplied as an answer.

Moreover, there may be considered an operation in which each piece of the AV equipment 15 or 16 on the wireless network 14 is sequentially inquired through the transfer section 25 in the bridging device 13 in an actual manner whenever the above inquiry is made. The contents included in the inquiries may be reserved in the related-identification-information storage section 24.

For example, when a certain command is issued from the AV equipment 11 to the AV equipment 15, the AV equipment 11 uses the PHY_ID = 1, which has been virtually assigned to the AV equipment 15, as a destination in order to transmit a packet as well as the case in which a command is transmitted to a piece of equipment on the same bus. The transmitted packet is received in the 1394 I/F section 17 and transmitted to the transfer section 25.

In the transfer section 25, it is determined whether the destination is the PHY_ID assigned in the temporary-ID assignment section 21 and the destination is converted to a destination on the wireless network 14, referring to information in the related-identification-information storage section 24. Also, if required, the packet is reconstructed to obtain a packet with a configuration suitable for the wireless network 14.

Then, the packet converted in the transfer section 25 is transmitted to the equipment 15 on the wireless network 14 through the wireless I/F section 18, that is, data transmission from the AV equipment 11 to the AV equipment 15 is executed.

When an answering packet (acknowledgement) is transmitted back from the AV equipment 15, the acknowledgement received through the wireless I/F section 18 is reconstructed in the transfer section 25 and is transmitted to the AV equipment 11 on the 1394 bus 12 through the 1394 I/F section 17. A configuration provided with means by which, when the AV equipment 15 does not return the acknowledgement, the 1394 I/F section 17 in the bridging device 13 acts as means for returning the acknowledgement, may be applied.

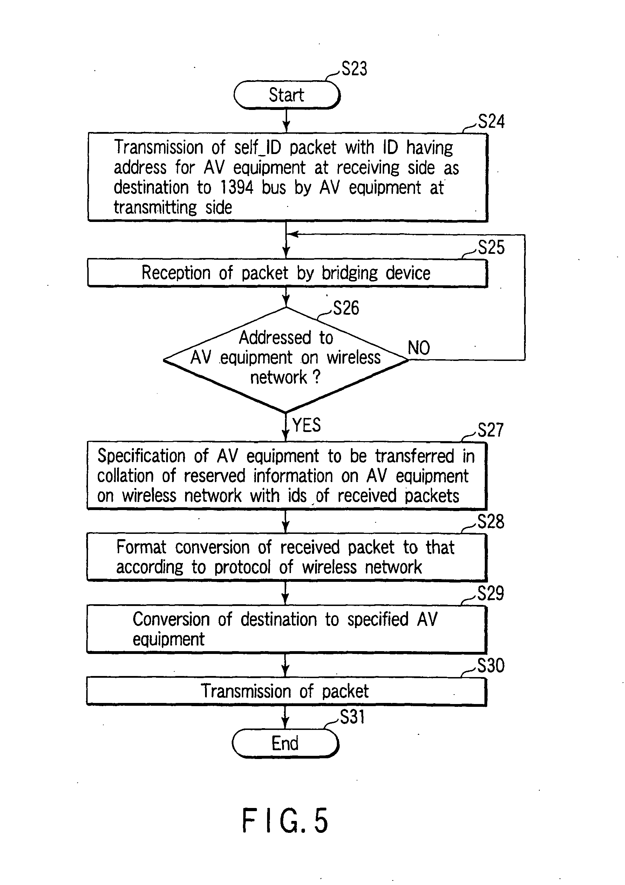

FIG. 5 shows a flow chart of operations for data transmission from the AV equipment 11 to the AV equipment 15. In the first place, processing is started (step S23) and, in step S24, the AV equipment 11 as the transmitting side sends to the 1394 bus 12 a Self_ID packet in which an ID (PHY_ID) having an address for the AV equipment 15 of the receiving side as a destination is stored.

Subsequently, the bridging device 13 receives the packet transmitted to the 1394 bus 12 in step S25 and it is determined at In STEP S26 whether the received packet is addressed to the AV equipment 15 or 16. When it is decided that the packet is not addressed to the AV equipment 15 or 16 on the network 14 (NO), the processing of the bridging device 13 is returned to that of STEP S25.

Also, when it is decided at the above-described STEP S26 that the received packet is addressed to the AV equipment 15 or 16 on the wireless network 14 (YES), the bridging device 13 specifies, in step S27, the AV equipment 15 on the wireless network 14 to which equipment the packet is required to be transferred, collating information, which has been reserved in the related-identification-information storage section 24, relating to the AV equipment 15 and 16 on the wireless network 14, with the ID of the received packet.

Subsequently, the bridging device 13 converts, in step S28, the format of the received packet to that complying with the protocol applied in the wireless network 14; the destination is converted in step S29 to that of the specified AV equipment 15 on the wireless network 14; and, in step S30, the packet is transmitted to the AV equipment 15, based on the protocol applied on the wireless network 14 to end the processing (step S31).

According to the above-described embodiments, it is possible, by transmitting the equal number of Self_ID packets to that of the pieces of AV equipment virtually connected to the AV equipment 11 on the 1394 bus 12, to easily identify pieces of equipment among networks to which different standards are applied, and to execute transmission/reception of a packet among the networks.

Also, since the pieces of equipment are virtually configured to be in a network on the same bus, communication can be realized according to a protocol even when the protocol cannot meet conditions for communication among different buses or even in an environment in which networks with different standards actually exist.

A case in which the pieces of AV equipment 15 and 16 on the wireless network 14 are virtually connected to the 1394 bus 12 has been explained in the above-described embodiments. Conversely, the AV equipment 11 on the 1394 bus 12 may be configured to be connected to the wireless network 14 in a virtual manner.

## Claims

1.  A network device comprising:

    a first connection section (17) configured to be connected to a first network (12) that conforms to a serial interface standard;
    a second connection section (18) configured to be connected to a second network (14) that conforms to a standard different from the first network (12); and
    a control section (19-25);
    said control section comprising:

    a device number detection section configured to detect the number of devices connected to the second network through the second connection section;
    an information collection section configured to collect information on the equipment connected to the second network through the second connection section;
    a detection section configured to detect a change caused in either the number of devices detected by the device number detection section or the information collected by the information collection section;
    a set membership assignment section configured to assign a relationship between a parent device and a child device, which is made when virtual connection is established on the first network in conformity with the serial interface standard, to each of the devices connected to the second network when the detection section detects a change in either the number of devices or the information;
    an assignment section configured to generate identification information corresponding to the number of devices detected by the device number detection section and assign the identification information to each of the devices connected to the second network, on the basis of the relationship between a parent device and a child device assigned by the set membership assignment section;
    a reset section configured to require reconstruction for adding the device connected to the second network to the first network, while the identification information is assigned by the assignment section to each of the devices connected to the second network; and
    a transmitting section configured to transmit the identification information to the first network through the first connection section, while the reconstruction is required by the reset section.

2.  A network device according to claim 1, wherein the control section (19-25) comprises:

    a storage section (24) configured to store information collected by the information collection section (20) and identification information generated by the assignment section (21) in relation to each other; and
a transfer section (25) configured to receive data supplied from the first network (12) through the first connection section (17), to specify device (15, 16) connected to the second network (14), using the identification information included in the data and the contents stored in the storage section (24), and to transmit the data to the specified device (15, 16).

**3.** A network bridging method for making data transmission between first network (12) that conforms to a serial interface standard and second network (19) chat conforms to a standard different from each other, comprising:

a first step for detecting the number of devices connected to the second network;
a second step for collecting information on the devices connected to the second network;
a third step for detecting a change caused in either the number detected in the first step or the information collected in the second step;
a fourth step for assigning, when a change in the number or the information is detected in the third step, a set membership to each device connected to the second network, the set membership indicating a relationship between a parent device and a child device, which is made when virtual connection is established on the first network in conformity with the serial interface standard, to each of the devices connected to the second network when the detection section detects a change in either the number of devices or the information;
a fifth step for generating identification information corresponding to the number of devices detected by the device number detection section and for assigning the identification information to each of the devices connected to the second network, on the basis of the relationship between a parent device and a child device assigned in the fourth step;
a sixth step for requiring reconstruction for adding the device connected to the second network to the first network, while the identification information is assigned to the respective device connected to the second network in the fifth step; and
a seventh step for transmitting the identification information to the first network, while the reconstruction is required in the sixth step.

**4.** The method according to claim 3, further comprising:

an eighth step for storing the information collected in the second step and the identification information generated in the fifth step in relation to each other; and
a ninth step for receiving data supplied from the first network, specifying the device connected to the second network tram identification information included in the data in accordance with contents stored in the eighth step, and transmitting the data to the specified device.

**Patentansprüche**

**1.** Netzwerkvorrichtung, mit:

einem ersten Verbindungsabschnitt (17), der konfiguriert ist, um mit einem ersten Netzwerk (12) verbunden zu sein, das einem seriellen Schnittstellenstandard entspricht;
einem zweiten Verbindungsabschnitt (18), der konfiguriert ist, um mit einem zweiten Netzwerk (14) verbunden zu sein, das einem vom ersten Netzwerk (12) unterschiedlichen Standard entspricht; und
einem Steuerabschnitt (19-25);
wobei der Steuerabschnitt umfasst:

einen Vorrichtungsanzahlerfassungsabschnitt, der konfiguriert ist, um die Anzahl von Vorrichtungen zu erfassen, die mit dem zweiten Netzwerk durch den zweiten Verbindungsabschnitt verbunden sind;
einen Informationsammelabschnitt, der konfiguriert ist, um Information über das Gerät zu sammeln, das mit dem zweiten Netzwerk durch den zweiten Verbindungsabschnitt verbunden ist;
einen Erfassungsabschnitt, der konfiguriert ist, um eine Änderung zu erfassen, die entweder in der Anzahl von Vorrichtungen, die durch den Vorrichtungsanzahlerfassungsabschnitt erfasst werden, oder der Information, die durch den Informationsammelabschnitt gesammelt wird, bewirkt wurde;
einen Eingestell-Zugehörigkeitszuweisungsabschnitt, der konfiguriert ist, um eine Beziehung zwischen einer Elterneinrichtung und einer Kindeinrichtung zuzuweisen, die durchgeführt wird, wenn eine virtuelle Verbindung auf den ersten Netzwerk konform mit den seriellen Schnittstellenstandard mit jeder der mit dem zweiten Netzwerk verbundenen Vorrichtungen aufgebaut ist, wenn der Erfassungsabschnitt eine Änderung entweder in der Anzahl von Vorrichtungen oder der Information erfasst;

einen Zuweisungsabschnitt, der konfiguriert ist, um Identifikationsinformation zu erzeugen, die der Anzahl der durch den Vorrichtungsanzahlerfassungsabschnitt erfassten Vorrichtungen entspricht, und die Identifikationsinformation jeder der mit dem zweiten Netzwerk verbundenen Vorrichtung zuzuweisen, auf der Grundlage der Beziehung zwischen einer Elterneinrichtung und einer Kindeinrichtung, die durch den eingestellten Zugehörigkeitszuweisungsabschnitt zugewiesen wurde;

einen Rücksetzabschnitt, der konfiguriert ist, um einen Neuaufbau zum Hinzufügen der mit dem zweiten Netzwerk verbundenen Vorrichtung zu erfordern, während die Identifikationsinformation durch den Zuweisungsabschnitt jeder der mit dem zweiten Netzwerk verbundenen Vorrichtungen zugewiesen wird; und

einen Übertragungsabschnitt, der konfiguriert ist, um die Identifikationsinformation an das erste Netzwerk durch den ersten Verbindungsabschnitt zu übertragen, während der Neuaufbau durch den Rücksetzabschnitt erforderlich ist.

2. Netzwerkvorrichtung gemäß Anspruch 1, bei der der Steuerabschnitt (19-25) umfasst:

einen Speicherabschnitt (24), der konfiguriert ist, um durch den Informationssammelabschnitt (20) gesammelte Information und durch den Zuweisungsabschnitt (21) erzeugte Identifikationsinformation in Bezug auf einander zu speichern, und

einen Transferabschnitt (25), der konfiguriert ist, um vom dem ersten Netzwerk (12) gelieferte Daten durch den ersten Verbindungsabschnitt (17) zu empfangen, um die mit dem zweiten Netzwerk (14) verbundene Vorrichtung (15, 16) mit der in den Daten enthaltenen Identifikationsinformation und den im Speicherabschnitt (24) gespeicherten Inhalt zu spezifizieren und die Daten an die spezifizierte Vorrichtung (15, 16) zu übertragen.

3. Netzwerkbrückenverfahren zum Durchführen einer Datenübertragung zwischen einem ersten Netzwerk (12), das einem seriellen Schnittstellenstandard entspricht, und einem zweiten Netzwerk (14), das einem vom ersten Netzwerk (12) unterschiedlichen Standard entspricht, mit:

einem ersten Schritt zum Erfassen der Anzahl der mit dem zweiten Netzwerk verbundenen Vorrichtungen;

einem zweiten Schritt zum Sammeln von Information über die mit dem zweiten Netzwerk verbundenen Vorrichtungen;

einem dritten Schritt zum Erfassen einer Änderung, die entweder in der beim ersten Schritt erfassten Anzahl oder der beim zweiten Schritt gesammelten Information bewirkt wurde;

einem vierten Schritt zum Zuweisen, wenn eine Änderung in der Anzahl oder der Information beim dritten Schritt erfasst wird, einer eingestellten Zugehörigkeit an jede mit dem zweiten Netzwerk verbundenen Vorrichtung, wobei die eingestellte Zugehörigkeit eine Beziehung zwischen einer Elterneinrichtung und einer Kindeinrichtung, die hergestellt wird, wenn eine virtuelle Verbindung auf dem ersten Netzwerk konform mit dem seriellen Schnittstellenstandard aufgebaut wird, mit jeder der mit dem zweiten Netzwerk verbundenen Vorrichtungen angibt, wenn der Erfassungsabschnitt eine Änderung entweder in der Anzahl von Vorrichtungen oder der Information erfasst;

einem fünften Schritt zum Erzeugen von Identifikationsinformation, die der Anzahl von Vorrichtungen entspricht, die durch den Vorrichtungsanzahlerfassungsabschnitt erfasst werden, und zum Zuweisen der Identifikationsinformation zu jeder der Vorrichtungen, die mit dem zweiten Netzwerk verbunden ist, auf der Grundlage der beim vierten Schritt zugewiesenen Beziehung zwischen einer Elterneinrichtung und einer Kindeinrichtung;

einem sechsten Schritt zum Erfordern eines Neuaufbaus zum Hinzufügen der mit der zweiten Netzwerk verbundenen Vorrichtung zum ersten Netzwerk, während die Identifikationsinformation der jeweiligen Vorrichtung zugewiesen wird, die mit dem zweiten Netzwerk beim fünften Schritt verbunden ist; und

einem siebenten Schritt zum Übertragen der Identifikationsinformation an das erste Netzwerk, während der Neuaufbau beim sechsten Schritt erforderlich ist.

4. Verfahren gemäß Anspruch 3, ferner mit:

einem achten Schritt zum Speichern der beim zweiten Schritt gesammelten Information und der beim fünften Schritt erzeugten Identifikationsinformation in Bezug auf einander, und

einem neunten Schritt zum Empfangen der vom ersten Netzwerk gelieferten Daten, Spezifizieren der mit dem zweiten Netzwerk (14) verbundenen Vorrichtung (15, 16) mit in den Daten enthaltener Identifikationsinformation in Übereinstimmung mit beim achten Schritt gespeichertem Inhalt und Übertragen der Daten an die spezifizierte Vorrichtung.

**Revendications**

1. Dispositif de réseau comprenant :

   une première section de connexion (17) qui est configurée de manière à être connectée à un premier réseau (12) qui est conforme à un standard d'interface série ;
   une seconde section de connexion (18) ) qui est configurée de manière à être connectée à un second réseau (14) qui est conforme à un standard qui est différent de celui du premier réseau (12) ; et
   une section de commande (19-25),
   ladite section de commande comprenant :

   une section de détection de nombre de dispositifs qui est configurée pour détecter le nombre de dispositifs qui sont connectés au second réseau par l'intermédiaire de la seconde section de connexion ;
   une section de collecte d'information qui est configurée pour collecter une information concernant l'équipement qui est connecté au second réseau par l'intermédiaire de la seconde section de connexion ;
   une section de détection qui est configurée pour détecter une modification générée au niveau de soit le nombre de dispositifs qui sont détectés par la section de détection de nombre de dispositifs, soit l'information qui est collectée par la section de collecte d'information ;
   une section d'assignation d'appartenance établie qui est configurée pour assigner une relation entre un dispositif parent et un dispositif enfant, laquelle relation est réalisée lorsqu'une connexion virtuelle est établie sur le premier réseau en conformité avec le standard d'interface série, à chacun des dispositifs qui sont connectés au second réseau lorsque la section de détection détecte une modification au niveau de soit le nombre de dispositifs, soit l'information ;
   une section d'assignation qui est configurée pour générer une information d'identification qui correspond au nombre de dispositifs qui sont détectés par la section de détection de nombre de dispositifs et pour assigner l'information d'identification à chacun des dispositifs qui sont connectés au second réseau, sur la base de la relation entre un dispositif parent et un dispositif enfant, laquelle relation est assignée par la section d'assignation d'appartenance établie ;
   une section de remise à l'état initial qui est configurée pour demander une reconstruction pour ajouter le dispositif qui est connecté au second réseau au premier réseau, tandis que l'information d'identification est assignée par la section d'assignation à chacun des dispositifs qui sont connectés au second réseau ; et
   une section de transmission qui est configurée pour transmettre l'information d'identification au premier réseau par l'intermédiaire de la première section de connexion tandis que la reconstruction est demandée par la section de remise à l'état initial.

2. Dispositif de réseau selon la revendication 1, dans lequel la section de commande (19-25) comprend :

   une section de stockage (24) qui est configurée pour stocker une information qui est collectée par la section de collecte d'information (20) et une information d'identification qui est générée par la section d'assignation (21) en relation l'une par rapport à l'autre ; et
   une section de transfert (25) qui est configurée pour recevoir des données qui sont appliquées depuis le premier réseau (12) par l'intermédiaire de la première section de connexion (17), pour spécifier un dispositif (15, 16) qui est connecté au second réseau (14) en utilisant l'information d'identification qui est incluse dans les données et les contenus stockés dans la section de stockage (24) et pour transmettre les données au dispositif spécifié (15, 16).

3. Procédé de pontage de réseau pour réaliser une transmission de données entre un premier réseau (12) qui est conforme à un standard d'interface série et un second réseau (14) qui est conforme à un standard qui est différent du premier standard, comprenant :

   une première étape pour détecter le nombre de dispositifs qui sont connectés au second réseau ;
   une seconde étape pour collecter une information concernant les dispositifs qui sont connectés au second réseau ;
   une troisième étape pour détecter une modification générée soit au niveau du nombre détecté au niveau de la première étape, soit au niveau de l'information qui est collectée au niveau de la seconde étape ;
   une quatrième étape pour assigner, lorsqu'une modification soit au niveau du nombre, soit au niveau de l'information est détectée au niveau de la troisième étape, une appartenance établie pour chaque dispositif qui est connecté au second réseau, l'appartenance établie indiquant une relation entre un dispositif parent et un

9

dispositif enfant, laquelle relation est réalisée lorsqu'une connexion virtuelle est établie sur le premier réseau en conformité avec le standard d'interface série, à chacun des dispositifs qui sont connectés au second réseau lorsque la section de détection détecte une modification au niveau de soit le nombre de dispositifs, soit l'information ;

une cinquième étape pour générer une information d'identification qui correspond au nombre de dispositifs qui sont détectés par la section de détection de nombre de dispositifs et pour assigner l'information d'identification à chacun des dispositifs qui sont connectés au second réseau, sur la base de la relation entre un dispositif parent et un dispositif enfant, laquelle relation est assignée au niveau de la quatrième étape ;

une sixième étape pour demander une reconstruction pour ajouter le dispositif qui est connecté au second réseau au premier réseau, tandis que l'information d'identification est assignée au dispositif respectif qui est connecté au second réseau au niveau de la cinquième étape ; et

une septième étape pour transmettre l'information d'identification au premier réseau tandis que la reconstruction est demandée au niveau de la sixième étape.

4. Procédé selon la revendication 3, comprenant en outre :

une huitième étape pour stocker l'information qui est collectée au niveau de la seconde étape et l'information d'identification qui est générée au niveau de la cinquième étape en relation l'une par rapport à l'autre ; et

une neuvième étape pour recevoir des données qui sont appliquées depuis le premier réseau, pour spécifier le dispositif qui est connecté au second réseau en utilisant l'information d'identification qui est incluse dans les données conformément à des contenus qui sont stockés au niveau de la huitième étape, et pour transmettre les données au dispositif spécifié.

FIG. 1

FIG. 3

FIG. 2

EP 1 394 996 B1

FIG. 4

S23

Start

S24

Transmission of self_ID packet with ID having address for AV equipment at receiving side as destination to 1394 bus by AV equipment at transmitting side

S25

Reception of packet by bridging device

S26

Addressed to AV equipment on wireless network ?

NO

YES

S27

Specification of AV equipment to be transferred in collation of reserved information on AV equipment on wireless network with ids of received packets

S28

Format conversion of received packet to that according to protocol of wireless network

S29

Conversion of destination to specified AV equipment

S30

Transmission of packet

S31

End

FIG. 5

**EP 1 394 996 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1063829 A2